# EUROPEAN PATENT SPECIFICATION

(11) **EP 2 393 694 B1**
(45) Date of publication and mention of the grant of the patent: **22.01.2014**
(21) Application number: 09839803.5
(22) Date of filing: 09.02.2009
(51) Int. Cl.: B60R 13/00, B60R 21/215, G09F 13/20

(54) **NON-ELECTRICAL METHODS FOR ILLUMINATION OF AIRBAG EMBLEMS**
NICHTELEKTRISCHE VERFAHREN ZUR BELEUCHTUNG VON AIRBAG-SYMBOLEN
PROCÉDÉS NON ÉLECTRIQUES POUR L'ÉCLAIRAGE D'EMBLÈMES DE COUSSIN DE SÉCURITÉ GONFLABLE

(43) Date of publication of application: 14.12.2011
(73) Proprietor: Autoliv ASP, Inc., Ogden, UT 84405 (US)
(72) Inventor: PAXTON, Donald, J., Romeo Michigan 48065 (US); BOKHARI, Nadeem, Troy Michigan 48085 (US); NEBEL, Raimund, 86836 Obermeitingen (DE)
(74) Representative: Schön, Thilo
(86) International application number: PCT/US2009/033514
(87) International publication number: WO 2010/090644

(56) References cited:
- EP-A1- 1 787 867
- WO-A2-2006/063325
- US-A- 4 603 065
- US-A- 4 677 008
- US-A1- 2003 209 889
- US-A1- 2007 200 074
- US-A1- 2007 278 770
- US-B1- 6 209 933
- US-B1- 6 684 557

## Description

### BACKGROUND OF THE INVENTION

Airbag systems are commonly used on vehicles and especially in steering wheels. These airbags are designed to inflate during an accident to prevent the occupant from harmful impact with the steering wheel during a crash. Accordingly, the airbag system will generally be positioned in the steering wheel.

It is also known that most vehicle manufacturers want to have their logo or trademark on the steering wheel. These logos or trademarks are often colored images and are positioned on the steering wheel (such as on the cover of the steering wheel that is used to cover the airbag system). Some logos may also have a metallic chrome portion for improved appearance. Such positioning of the logo fosters brand recognition and also helps the vehicle occupant to remember that cars made by the vehicle manufacturer have airbags and are thus safer.

In order to further make the company's logo "stand out," some parties have even begun to seek for ways to illuminate the logo/trademark. One example, of this type of system is found in International Patent Publication No. WO 20071084031. Generic US 2003/0209889 A1 shows a steering wheel airbag cover with a logo that can be illuminated by means of an LED. This LED can be placed inside the logo.

### BRIEF SUMMARY OF THE INVENTION

The present embodiments relate to an airbag apparatus comprising an emblem and ways to illuminate an airbag emblem on an airbag cover that do not involve electrical currents, electricity, etc. Rather, the methods described herein are for self-illuminating airbag emblems. These emblems are generally made of plastic. The plastic will generally be modified to include self-luminous microspheres. It is this self-illuminating material that "glows in the dark" that provides illumination to the emblem.

The self-luminous microspheres may be added directly to the plastic materials. For example, the microspheres may compose less than 20% of the total volume of the plastic. Alternatively, the self-luminous microspheres may be added to a paint that is deposited or added onto the emblem. Again, the microspheres will illuminate when it is dark to provide illumination to the emblem. The emblem incorporating the microspheres is used in conjunction with a metallic top layer. The metallic layer may (or may not) be translucent, such as a translucent chrome layer or a translucent aluminum layer. This metallic top layer will give the emblem a metallic appearance during daylight hours but will still allow the emblem to have an illuminated appearance (via the illumination provided by the microspheres) during periods of relative darkness (*i*.*e*., when there is sufficient absence of light that the emblem will appear to be illuminated).

While many of the present embodiments focus on emblems on steering wheel airbag covers, the present embodiments using self-illumination materials in the plastic could equally be applied to other vehicle airbags.

### BRIEF DESCRIPTION OF THE SEVERAL VIEWS OF THE DRAWINGS

In order that the manner in which the above-recited and other features and advantages of the invention are obtained will be readily understood, a more particular description of the invention briefly described above will be rendered by reference to specific embodiments thereof which are illustrated in the appended drawings. Understanding that these drawings depict only typical embodiments of the invention and are not therefore to be considered to be limiting of its scope, the invention will be described and explained with additional specificity and detail through the use of the accompanying drawings in which:

Figure 1A is a cross-sectional view of an airbag cover which is not part of the present invention with an emblem that may be illuminated (backlit) wherein the airbag cover is shown during daylight hours;

Figure 1B is a cross-sectional view of an airbag cover which is not part of the present invention with an emblem that may be illuminated (backlit), wherein the airbag cover is shown during periods of relative darkness;

Figure 2 is a perspective view of an airbag emblem according to the present embodiments; and

Figure 3 is a cross sectional view of the embodiment of Figure 2 showing how the emblem may be backlit.

### DETAILED DESCRIPTION OF THE INVENTION

The presently preferred embodiments of the present invention will be best understood by reference to the drawings, wherein like parts are designated by like numerals throughout. It will be readily understood that the components of the present invention, as generally described and illustrated in the figures herein, could be arranged and designed in a wide variety of different configurations. Thus, the following more detailed description of the embodiments of the present invention, as represented in the Figures, is not intended to limit the scope of the invention, as claimed, but is merely representative of presently preferred embodiments of the invention.

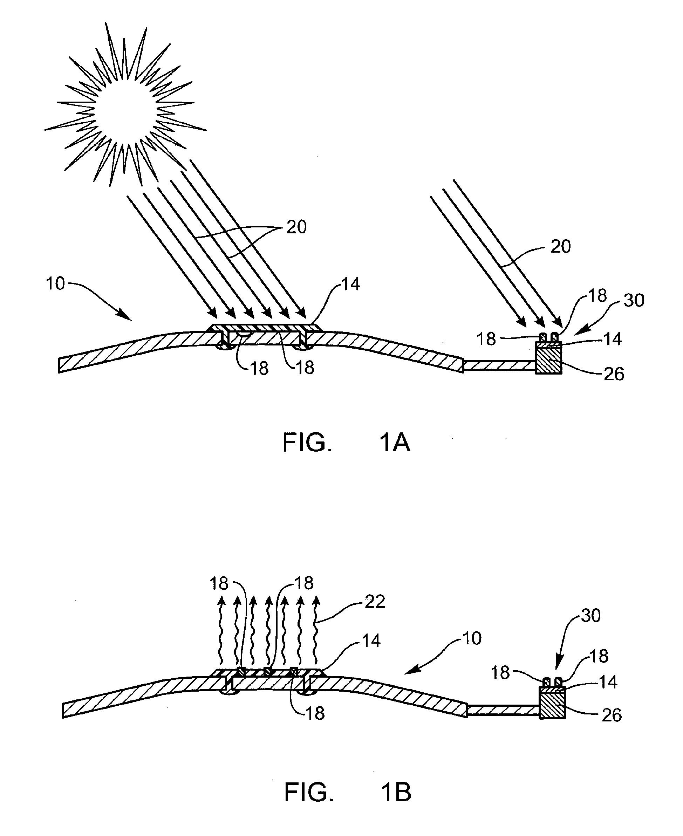

Referring now to Figure 1A, a cross-sectional view shows an airbag cover 10 which is not part of the present invention that includes an emblem 14. As noted above, the emblem 14 represents the logo or trademark of the vehicle manufacturer. The emblem 14 is made of a plastic material. Those skilled in the art will appreciate how to construct the emblem 14 and how the emblem 14 may be added to the cover 10. For example, the plastic material may be a polycarbonate material or a polycarbonate blend such as polycarbonate plus polyester or polycarbonate plus ABS (Acrylonitrile Butadiene Styrene). Other types of plastics may also be used.

The plastic material used to construct the cover includes one or more phosphorescent additives 18. These additives are added directly to the plastic material. As shown in Figure 1A, the phosphorescent additives 18 may be distributed equally or substantially throughout the emblem 14. Thus, while the additives 18 are shown in Figure 1A as being positioned on certain portions of the emblem 14, this depiction is made for illustrative purposes only. Those skilled in the art will appreciate that the phosphorescent additives 18 may be substantially and/or evenly distributed throughout the entire emblem 14.

As shown in Figure 1A, the phosphorescent additives 18 cause the emblem 14 to absorb light 20 (such as sunlight, ambient light) during daylight or other periods of light. Thus, during daylight hours, the phosphorescent additives may be said to be "charging." Then, as shown in Figure 1B, the phosphorescent additives 18 cause the emblem 14 to emit light 22 during period of night or darkness. Thus, the emblem 14, via the phosphorescent additives 18, will "glow in the dark" and be illuminated. Moreover, not only will the emblem 14 be illuminated at nighttime, but also, it will be illuminated ("glow in the dark") during other periods of darkness, such as when the vehicle passes through a dark tunnel, etc. Some examples of the materials that could be used for the present embodiments include "Makrolon PC Luna" available from Bayer Aktiengesellschaft of Germany. Other materials from this company, as well as other similar materials, may also be used.

The "glow in the dark" element means that the emblem 14 may be illuminated without any type of electricity or electrical current. Rather, this emblem 14 is a self-illuminated emblem. This provides significant advantages as it can reduce the costs associated with producing the illuminated emblem (as no wiring or illumination costs are incurred). Further, the emblem 14 will not require any light guiding features to get the light from a light source to the emblem, nor is there a requirement for a special design of the emblem. Because no wiring is used in this configuration, there is no chance of defects in the wiring, etc. that would render illumination of the emblem defective. Moreover, the emblems, do not affect the deployment of the airbag in any way.

It should also be noted that the possibility of illumination of the emblem 14 with multiple different colors exists. This may occur by using phosphorescent additives 18 that have different colors when illuminated. Such different phosphorescent additives 18 means that a portion of the emblem 14 would be one color and other portions of the emblem 14 could be a second color, a third color, etc. Those skilled in the art would appreciate how to implement such embodiments.

It is also possible to have illumination in multiple colors by using known 2-K or 3-K molding techniques. Such molding techniques use "multi shot" molds designed to "overmold" within a single molding cycle and is processed on specialized injection molding machines with two or more injection units. Within the mold, pairs of Identical cores and pairs of different cavities are provided. After injection of a first material (for example, a plastic having one color of self-luminous additive) the component is rotated on the core from the one cavity to another. This second cavity differs from the first in that the detail for the second material (for example, a plastic having a different color of self-luminous additive) is included. The second material is then injected into the second cavity detail before the completed part is ejected from the mold. Of course, a skilled artisan using these techniques could mold an emblem that illuminates in two or more colors.

Further the emblem 14 may be coated so that it has a metallic look (such as with aluminum, chromium, or a PVD (Physical Vapor Deposit) material to provide this metallic "look"). It would have a metallic look in the daylight, but an illuminated look during darkness. The coating could operate to hide the illumination during the daylight hours.

It should also be noted that the emblems may be added to other types of vehicle apparatus 30. (The airbag cover 10 is a type of a vehicle apparatus). Thus, as shown in Figure 1A, a plastic telltale 26 may also be made with the phosphorescent additives 18. This telltale 26 could be, for example, a horn symbol, a button, etc. The term "indicia" shall include emblems 14 and telltales 26 and any other vehicular component for which self-illumination may be advantageous. The telltale 26 may comprise a symbol that tells the user what the telltale does (*i.e.,* a symbol telling the user that it is a horn, is lettering explaining the buttons function, etc.). Thus, the telltale 26 will be illuminated during periods of darkness due to the phosphorescent additives 18, in the manner described above. In Figure 1A, the telltale 26 is positioned proximate the edge of the cover 14. However, any position may be used, as desired, within the vehicle interior. Those skilled in the art will appreciate where the telltale 26 may be positioned. In Figures 1A and 1B, an emblem 14 (including the phosphorescent additives 18) is added to the telltale 26. The phosphorescent additives 18 may be added directly to the telltale 26 without an emblem 14.

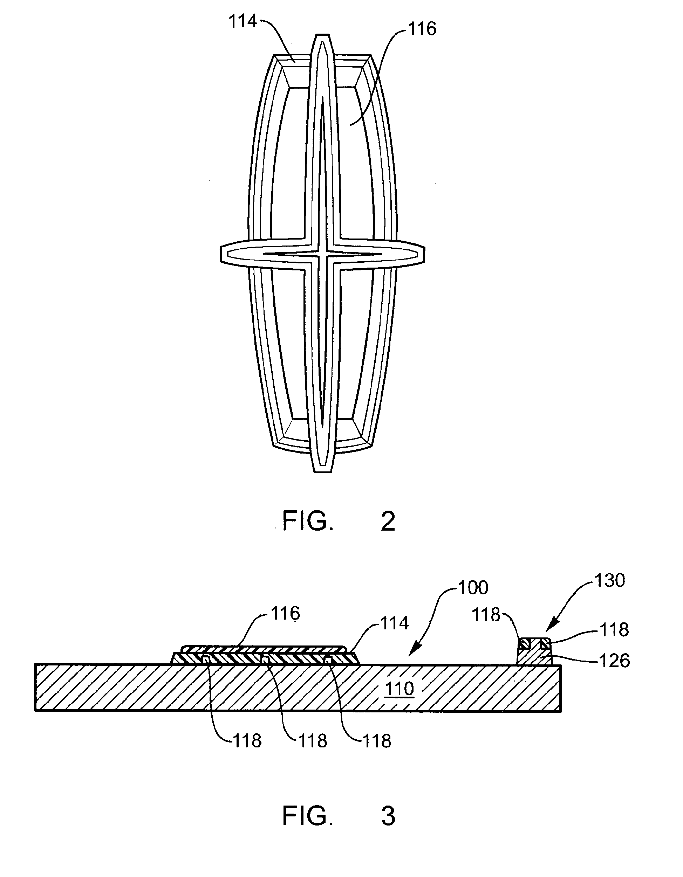

Referring now to Figures 2 and 3, an embodiment of the present invention is illustrated. Figure 2 shows an emblem 114 having a metallic layer 116 such as a chrome-plated surface, while Figure 3 shows a vehicle component 100 that comprises an airbag cover 110. The cover 110 includes an emblem 114, such as shown in Figure 2, that includes a metallic layer (chrome-plated surface) 116 that gives the emblem 114 the desired metallic look. The emblem 114 is made of a plastic material that may be covered by the metallic top layer 116. The plastic material used to construct the emblem 114 may, like the prior embodiments, be self-illuminating. To this end, the emblem 114 includes self-luminous microspheres 118 that are added to the plastic material used to construct the emblem 114. Examples of such self-luminous microspheres 118 are found in U.S. Patent No. 4,677,008. Again, in Figure 3, the microspheres 118 are shown in particular areas of the emblem 114. This depiction is made for clarity in the drawing. However, other embodiments may be constructed in which the microspheres 118 are added to the plastic such that the microspheres 118 are distributed substantially and/or evenly throughout the emblem 114. The microspheres 118 provide illumination that is capable of illuminating the emblem 114. Additionally, phosphorescent additives or microspheres could be added to a paint or other coating that is applied to the emblem 114 to cause it to illuminate as desired.

The emblem 114 has a metallic appearance during periods of daylight because the metallic top layer 116 covers the microspheres 118. Thus, the emblem 114 has a metallic appearance during the day (or periods of light) but has an illuminated appearance during periods of darkness and/or night hours. The metallic top layer 116 may operate to hide the illumination of the microspheres 118 during periods of illumination (such as daylight hours) but then allow illumination of the emblem 114 during periods of relative darkness (such as nighttime hours). This is especially true if the metallic top layer 116 is a translucent metallic layer such as metallic chrome or aluminum. Thus, during the day, the emblem 114 may not appear to be illuminated. The microspheres may also be available in multiple illuminating colors, thereby giving the manufacturing flexibility and the ability to create a visually appealing design.

The microspheres 118 contemplated and disclosed herein can have a half-life of 12.5 years in their ability to provide illumination which may be superior to other possible sources of illumination for the emblem 114. (This means that after 12.5 years, half of the microspheres 118 will no longer provide illumination). However, the microspheres 118 require no electrical charge to provide the illumination, which greatly reduces the cost of implementation of the illuminated emblem 114 to manufacturers. The microspheres are also very inexpensive and may comprise less than 20% of the total plastic (*i.e.,* less than 20% of the total amount of the plastic material) to provide adequate illumination of the emblem 114. This solution may be significantly less expensive than other illumination sources (*i.e.,* less than $0.05 U.S dollars as opposed to $8.00 U.S. dollars).

Of course, additional embodiments may be constructed in which the microspheres 118 are not added directly to the plastic during the plastic manufacturing process. Such other embodiments include depositing on the emblem 114 and/or painting the emblem 114 with a paint containing the microspheres 118. The paint may be painted (or otherwise added) to the emblem 114 after the emblem 114 is formed of a non-luminous material.

Again, although the embodiments of Figures 2 and 3 show the use of microspheres 118 as part of an airbag cover 110, those skilled in the art will appreciate that this technology could also apply to other vehicle airbags as well.

For example, Figure 3 also shows the use of this technology on a vehicle component 130 which is not part of the present invention. This vehicle component 130 is a button 126 in which the plastic used for the button 126 has been modified to include the microspheres 118. The component 130 is positioned on the cover 114. However, those skilled in the art will appreciate other locations where this component may be positioned, as necessary/desired. Thus, using these microspheres, the button 126 will be illuminated.

## Claims

1. An airbag apparatus comprising:
an emblem (114); and
an illumination source (118) in the emblem for illuminating said emblem,
**characterized in that**
a metallic top layer (116) is present on the emblem, and
the illumination source is formed by self-luminous microspheres (118) that illuminate the emblem.

2. An airbag apparatus as in claim 1 wherein the emblem (114) is made of a plastic material, wherein the self-luminous microspheres (118) are added to the plastic material, and wherein the amount of the self-iuminous (118) is material, and wherein the amount of the self-luminous microspheres (118) is preferably less than 20% of the total composition of the plastic.

3. An airbag apparatus as in claim 1 wherein the self-luminous microspheres (118) are added to a paint that has been added to or onto the emblem.

4. An airbag apparatus as in claim 1 wherein the emblem is added to a steer-ing wheel airbag cover (110).

5. An airbag apparatus as in claim 1 wherein the metallic top layer (116) hides the illumination of the self-luminous microspherres (118) during daylight hours, wherein the metallic layer (116) is preferably a translucent chrome layer.

## Patentansprüche

1. Airbagvorrichtung, umfassend:
ein Emblem (114); und
eine Beleuchtungsquelle (118) in dem Emblem zum Beleuchten des Emblems,
**dadurch gekennzeichnet, dass**
eine metallische obere Schicht (116) auf dem Emblem vorhanden ist, und
die Beleuchtungsquelle durch selbstleuchtende Mikrokügelchen (118) gebildet ist, die das Emblem beleuchten.

2. Airbagvorrichtung nach Anspruch 1, wobei das Emblem (114) aus einem Kunststoffmaterial gefertigt ist, wobei die selbstleuchtenden Mikrokügelchen (118) dem Kunststoffmaterial zugegeben sind und wobei die Menge der selbstleuchtenden Mikrokügelchen (118) vorzugsweise weniger als 20 % der Gesamtzusammensetzung des Kunststoffs beträgt.

3. Airbagvorrichtung nach Anspruch 1, wobei die selbstleuchtenden Mikrokügelchen (118) einer Farbe zugegeben sind, die dem Emblem zugegeben oder darauf gegeben wurde.

4. Airbagvorrichtung nach Anspruch 1, wobei das Emblem an eine Airbagabdeckung (110) eines Lenkrads angefügt ist.

5. Airbagvorrichtung nach Anspruch 1, wobei die metallische obere Schicht (116) die Beleuchtung der selbstleuchtenden Mikrokügelchen (118) tagsüber verdeckt, wobei es sich bei der metallischen Schicht (116) vorzugsweise um eine lichtdurchlässige Chromschicht handelt.

## Revendications

1. Appareil de coussin de sécurité gonflable comprenant :
un emblème (114), et
une source d'éclairage (118) dans l'emblème pour éclairer ledit emblème,
**caractérisé en ce que**
une couche supérieure métallique (116) se trouve sur l'emblème, et
la source d'éclairage est formée par des microsphères auto-luminescentes (118) qui éclairent l'emblème.

2. Appareil de coussin de sécurité gonflable selon la revendication 1, l'emblème (114) étant fabriqué en une matière plastique, les microsphères auto-luminescentes (118) étant ajoutées à la matière plastique, et la quantité des microsphères auto-luminescentes (118) étant de préférence inférieure à 20 % de la composition totale du plastique.

3. Appareil de coussin de sécurité gonflable selon la revendication 1, les microsphères auto-luminescentes (118) étant ajoutées à une peinture qui a été ajoutée à ou sur l'emblème.

4. Appareil de coussin de sécurité gonflable selon la revendication 1, l'emblème étant ajouté à un couvercle (110) de coussin de sécurité gonflable d'un volant de direction.

5. Appareil de coussin de sécurité gonflable selon la revendication 1, la couche supérieure métallique (116) cachant l'éclairage des microsphères auto-luminescentes (118) pendant les heures du jour, la couche métallique (116) étant de préférence une couche de chrome translucide.
